# EUROPEAN PATENT SPECIFICATION

(11) **EP 2 552 785 B1**
(45) Date of publication and mention of the grant of the patent: **21.10.2015**
(21) Application number: 11724754.4
(22) Date of filing: 28.03.2011
(51) Int. Cl.: B65B 9/213, B65B 29/00

(54) **APPARATUS AND METHOD FOR USE IN THE FORMATION OF A TOBACCO POUCH PRODUCT**
VORRICHTUNG UND METHODE ZUR HERSTELLUNG EINES TABAKBEUTELPRODUKTS
APPAREIL ET PROCÉDÉ POUR LA RÉALISATION D'UN PRODUIT DE BLAGUE À TABAC

(30) Priority: 26.03.2010 US 318261 P
(43) Date of publication of application: 06.02.2013
(73) Proprietor: Philip Morris Products S.A., 2000 Neuchâtel (CH)
(72) Inventor: RINEHART, Steven, R., Chesterfield VA 23832 (US); BELCASTRO, Marc, D., Glen Allen VA 23059 (US); WILLIAMS, Dwight, D., Powhatan VA 23139 (US)
(74) Representative: Millburn, Julie Elizabeth
(86) International application number: PCT/IB2011/000961
(87) International publication number: WO 2012/004642

(56) References cited:
- EP-A1- 1 532 865
- CH-A- 514 468
- FR-A1- 2 819 235
- GB-A- 1 266 924
- US-A- 2 160 367
- US-A- 3 482 373
- US-A- 4 608 810
- US-A- 5 361 560

## Description

### FIELD

The present invention relates to an apparatus, system and method for applying a flavorant or other component to a pouched product.

### ENVIRONMENT

Pouched tobacco products offer an individual portion of tobacco that is to be placed under the upper lip. During production of pouched products, problems may arise when flavorants or other components are sought to be included. As may be appreciated, when a liquid flavorant or other material is added directly to the tobacco, the flow characteristics of the tobacco used to fill the individual pouches may be altered significantly, leading to production problems and downtime. As such, it would be desirable to provide an apparatus, system and method for applying a flavorant or other component that avoids such problems.

FR 2 819 235 A1 discloses apparatus for packaging products in containers of the type comprising means for guiding the products to be packaged, defining a duct for guiding the products into containers and a duct for supplying gas Into the containers, characterized in that the duct for supplying gas at least partially surrounds the duct for guiding the products.

US 5361 560 discloses an apparatus for flavouring coffee within the package as the package is being formed.

### SUMMARY

Provided is an apparatus for use in the formation and filling of a pouched flavored product. The apparatus includes an elongated outer tubular member, the elongated outer tubular member having a first end, a second end and an outer surface; an elongated Inner tubular member, the elongated inner tubular member coaxially aligned within the elongated outer tubular member so as to form an annular delivery chamber having a first end and a second end, the elongated inner tubular member having a first end and a second end, the first end of the elongated inner tubular member for receiving the product to be pouched, the second end of the elongated inner tubular member having a plurality of circumferentially spaced exit orifices In fluid communication with the annular delivery chamber and directed radially Inwardly, the second end of the elongated inner tubular member for placing the product within the pouch being formed; and an inlet hub adjacent the first end of the elongated outer tubular member and the first end of the elongated inner tubular member, the inlet hub having a first inlet in communication with the first end of the elongated inner tubular member and a second inlet in fluid communication with the annular delivery chamber; wherein the outer surface of the elongated outer tubular member provides a surface for forming the pouched product thereabout, wherein the first end of the annular delivery chamber is sealed by a first closure ring and the second end of the annular delivery chamber is sealed by a second closure ring.

Also provided is a system for making a pouched flavored product The system includes an arrangement operative to supply a web material for forming a pouch; an apparatus for use in the formation and filling of the pouched product, the apparatus including (I) an elongated outer tubular member, said elongated outer tubular member having a first end, a second end and an outer surface; (II) an elongated inner tubular member, said elongated inner tubular member coaxially aligned within said elongated outer tubular member so as to form an annular delivery chamber having a first end and a second end, the elongated inner tubular member having a first end and a second end, said first end of the elongated inner tubular member for receiving the product to be pouched, said second end of the elongated inner tubular member having a plurality of circumferentially spaced exit orifices in fluid communication with the annular delivery chamber and directed radially inwardly, the second end of the elongated inner tubular member for placing the product within the pouch being formed; and (iii) an inlet hub adjacent said first end of said elongated outer tubular member and said first end of said elongated inner tubular member, said Inlet hub having a first inlet in communication with said first end of said elongated inner tubular member and a second inlet in fluid communication with said annular delivery chamber; said outer surface of said elongated outer tubular member providing a surface for forming the pouched product from the supply of web material and said second end of the annular delivery chamber being sealed; a forming arrangement for receiving the web from said supply of web material and folding the web about said apparatus to form the pouch having longitudinal edge portions; and a sealing arrangement operative for sealing the longitudinal edge portions of the web to form a seam as the web is drawn along said apparatus.
Also provided is a method of forming a pouched flavored product. The method includes the steps of providing a web for use in forming the pouched flavored product; providing a liquid comprising one or more flavorants to an apparatus for use in the formation and filling of a pouched flavored product, the apparatus including (i) an elongated outer tubular member, the elongated outer tubular member having a first end, a second end and an outer surface; (ii) an elongated inner tubular member, the elongated inner tubular member coaxially aligned within the elongated outer tubular member so as to form an annular delivery chamber and having a first end and a second end, the first end for receiving the product to be pouched, the second end having a plurality of circumferentially spaced exit orifices in fluid communication with the annular delivery chamber and directed radially inwardly, the second end for placing the product within the pouch being formed; and (iii) an inlet hub affixed to the first end of the elongated outer tubular member and the first end of the elongated inner tubular member, the inlet hub having an axially aligned inlet in communication with the first end of the elongated inner tubular member and a tangential inlet in fluid communication with the annular delivery chamber; wherein the outer surface of the elongated outer tubular member provides a surface for forming the pouched flavored product thereabout and the liquid comprising one or more flavorants is fed to the annular delivery chamber and metered through the plurality of circumferentially spaced exit orifices thereby providing at least a partial coating of the one or more flavorants to an inner surface of the pouch; and enclosing a product component with the web.

### BRIEF DESCRIPTION OF THE DRAWINGS

The forms disclosed herein are illustrated by way of example, and not by way of limitation, in the figures of the accompanying drawings and in which like reference numerals refer to similar elements and in which:
FIG. 1 illustrates one form of a pouched tobacco product, produced in accordance herewith;
FIG. 2 illustrates a cross-sectional view of one form of a pouched tobacco product, including an optional liner, produced in accordance herewith;
FIG. 3 illustrates exemplary equipment for formation of pouched tobacco products, in accordance herewith;
FIG. 4 illustrates an apparatus for use in the formation and filling of a pouched product, in accordance herewith;
FIG. 4A presents a sectional view of an apparatus for use in the formation and filling of a pouched product taken along line 4-4, in accordance herewith;
FIG. 4B presents a cross-sectional view of an apparatus for use in the formation and filling of a pouched product, in accordance herewith; and
FIG. 5 is a perspective view of pouch material shown in a condition of being rolled into a tubular formation.

### DETAILED DESCRIPTION

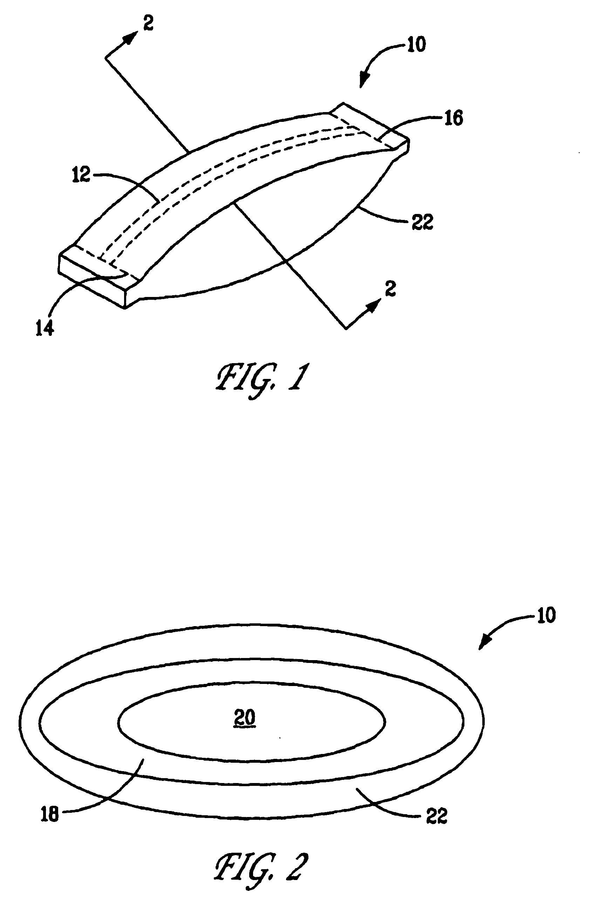

Various aspects will now be described with reference to specific forms selected for purposes of illustration. It is to be noted that the figures provided herein are not drawn to any particular proportion or scale, and that many variations can be made to the illustrated forms. Reference is now made to FIGS. 1-5, wherein like numerals are used to designate like elements throughout.

Each of the following terms written in singular grammatical form: "a," "an," and "the," as used herein, may also refer to, and encompass, a plurality of the stated entity or object, unless otherwise specifically defined or stated herein, or, unless the context clearly dictates otherwise. For example, the phrases "a device," "an assembly," "a mechanism," "a component," and "an element," as used herein, may also refer to, and encompass, a plurality of devices, a plurality of assemblies, a plurality of mechanisms, a plurality of components, and a plurality of elements, respectively.

Each of the following terms: "includes," "including," "has," "'having," "comprises," and "comprising," and, their linguistic or grammatical variants, derivatives, and/or conjugates, as used herein, means "including, but not limited to."

Throughout the illustrative description and the examples, a numerical value of a parameter, feature, object, or dimension, may be stated or described in terms of a numerical range format. It is to be fully understood that the stated numerical range format is provided for illustrating implementation of the forms disclosed herein, and is not to be understood or construed as inflexibly limiting the scope of the forms disclosed herein.

Moreover, for stating or describing a numerical range, the phrase "in a range of between about a first numerical value and about a second numerical value," is considered equivalent to, and means the same as, the phrase "in a range of from about a first numerical value to about a second numerical value," and, thus, the two equivalently meaning phrases may be used interchangeably.

It is to be understood that the various forms disclosed herein are not limited in their application to the details of the order or sequence, and number, of steps or procedures, and sub-steps or sub-procedures, of operation or implementation of forms of the method or to the details of type, composition, construction, arrangement, order and number of the system, system sub-units, devices, assemblies, sub-assemblies, mechanisms, structures, components, elements, and configurations, and, peripheral equipment, utilities, accessories, and materials of forms of the system, set forth in the following illustrative description, accompanying drawings, and examples, unless otherwise specifically stated herein. The apparatus, systems and methods disclosed herein can be practiced or implemented according to various other alternative forms and in various other alternative ways, within the scope of the claims.

It is also to be understood that all technical and scientific words, terms, and/or phrases, used herein throughout the present disclosure have either the identical or similar meaning as commonly understood by one of ordinary skill in the art, unless otherwise specifically defined or stated herein. Phraseology, terminology, and, notation, employed herein throughout the present disclosure are for the purpose of description and should not be regarded as limiting.

FIG. 1 illustrates a pouched tobacco product 10, produced in accordance herewith. As shown, the pouched tobacco product 10 has a longitudinal seam 12 and transverse seams 14 and 16, as will be described in further detail below. With reference to FIG. 2, a pouched tobacco product 10 is shown with optional liner 18 disposed between a portion of tobacco material 20 and a web 22. The optional liner 18 reduces the tendency of the tobacco material 20 to discolor or stain the web 22. The optional liner 18 reduces staining of the web 22 by reducing the opportunity for moisture from the tobacco material 20 or its additives to reach the web 22 prior to use. It also allows the moisture content and other constituents of the tobacco material 20 to be maintained in its original, fresh, condition until use.

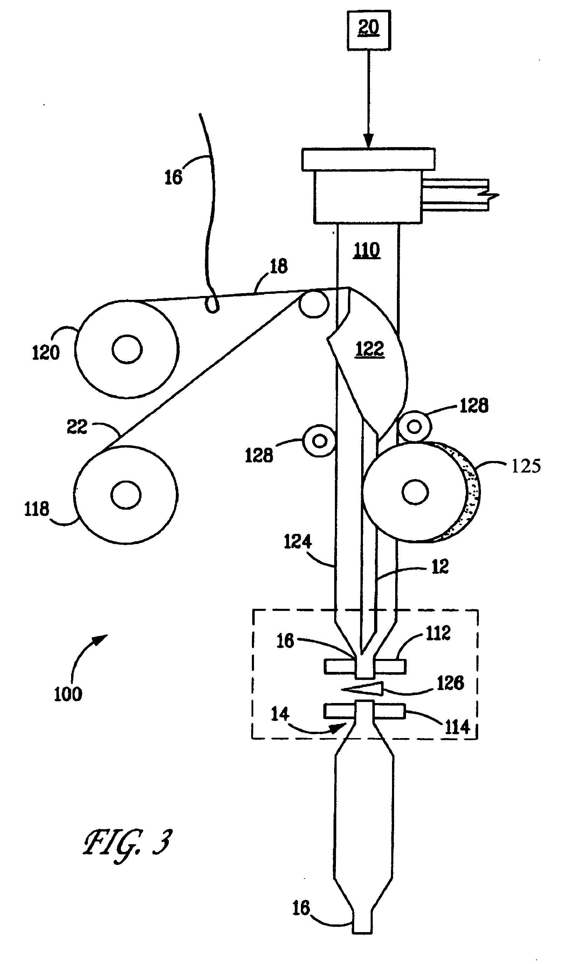

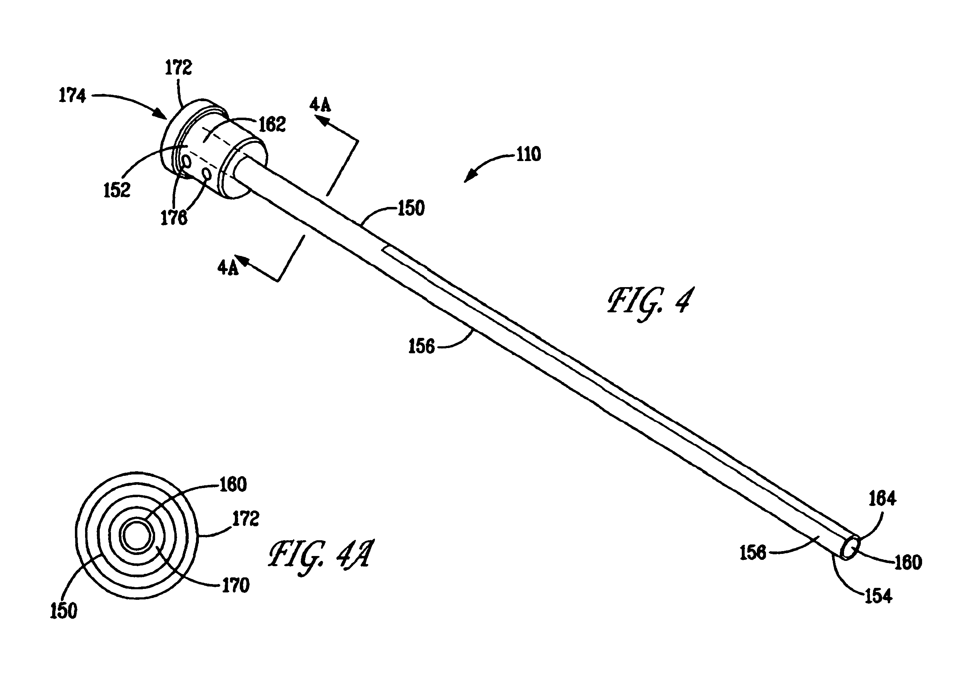

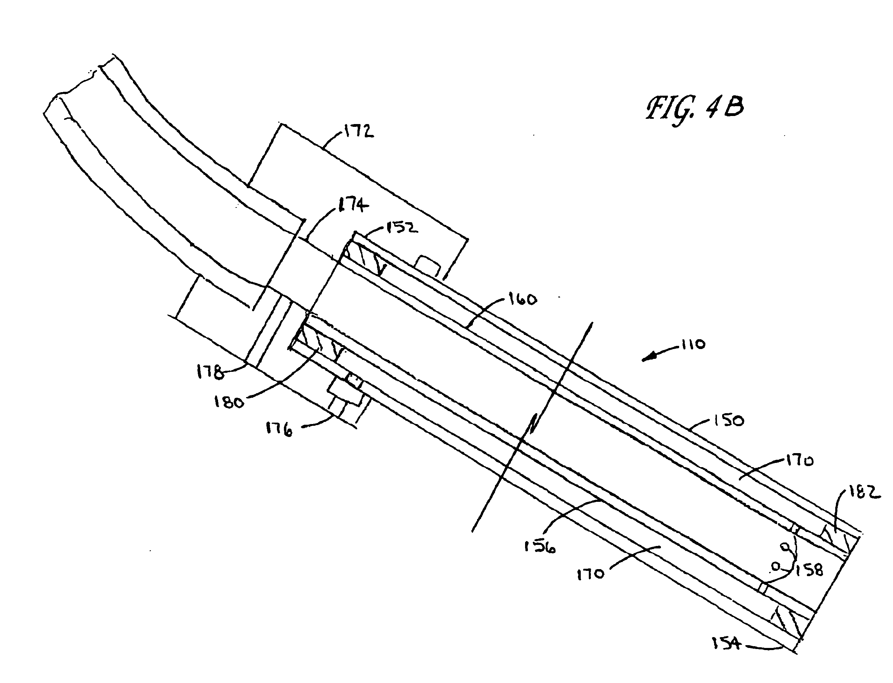

Any suitable equipment may be used to produce the pouched tobacco product 10, so long as it can accommodate the apparatus for use in the formation and filling of a pouched product disclosed herein and depicted in FIGS. 3 and 4. For example, a poucher machine sourced from Merz Verpackungsmaschinen GmbH, Lich, Germany, may be employed.

With reference to FIG. 3, a system 100 for use in producing pouched tobacco product is shown schematically. System 100 includes an apparatus 110 for use in the formation and filling of a pouched product, as disclosed herein. In operation, ribbons of web 22 and, optionally, liner film 18 from which disposable backing 116 has been removed are both drawn from separate bobbins 120, 118, respectively, toward a forming shoulder 122, which folds the web 22 and optional liner film 18 about the apparatus 110, forming a pouch precursor 124.

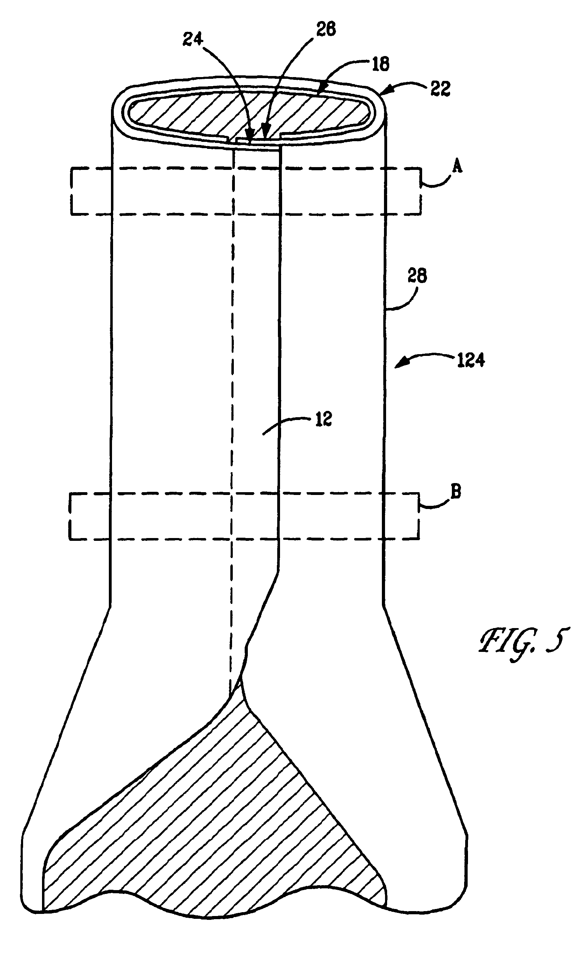

Referring also to FIG. 5, edge portions 24, 26 are brought into overlapping relation and the tubular formation 28 is established. FIG. 5 illustrates the case employing an optional liner 18, where web 22 and optional liner 18 are folded into a tubular formation 28 with the optional liner 18 on the inside. In so doing, the longitudinal edge portions 24, 26 are brought into an overlapping, web-to-web relation and sealed to form the longitudinal seam 12, which is preferably about 3 mm wide in the exemplary form. As shown, the longitudinal seam 12 is essentially free of liner material so that the seal is steadfast. Such arrangement also minimizes heating of liner material during sealing operations along the longitudinal seam 12 so that impact on taste of the product during formation of the longitudinal seam 12 is minimized. A packet of pouched tobacco 10 is achieved by introduction of tobacco 20 into the tubular form 28, and also sealing and cutting the tubular formation 28 at locations A and B, as described in further detail below

Referring again to FIG. 3, a heated knurled disc 125 then seals the overlapping longitudinal edge portions 24, 26 of the web 22 by pressing and heating the seam as the web 22 is drawn along apparatus 110.

Drive belts or drive wheels 128 located below forming shoulder 122 continuously pull web 22 through forming shoulder 122 and beyond. An upper pair of opposing heat-sealing elements 112, and a lower pair of heat-sealing elements 114 cooperate with a knife 126 to repetitively seal and sever. Discrete charges of tobacco 20 are fed through apparatus 110 in timing with operation of sealing elements 112, 114. The transverse sealing elements 112, 114 and knife 126 arrangement follow a motion cycle where sealing elements 112, 114 close together, whereupon tobacco 20 is fed into the apparatus 110. They then move down together in opposing relation with each other to a final lowered position whereupon the knife 126 operates to sever the web 22. The sealing elements apparatus 110 then retract and return to original starting position further up apparatus 110.

After insertion of a portion of tobacco 20 into the tubular formation 28, sealing and severing operations form seams 14, 16 at a location corresponding to the area A shown in FIG. 5 to close a filled pouch 10 and preferably to form the bottom seal of the next pouch to be filled. After severing in the area of the seams 14, 16, a filled pouch 10 is closed at its upper transverse seam 14, which may be, for example, about 3.5 mm wide. Severing in the area of the seals 14, 16 thus separates the top transverse seam 14 of a filled pouch 10 from the bottom seam 16 of the next pouch to be filled.

Alternatively, when an optional liner 18 is employed, a laminate of web and film liner may be drawn from a single bobbin to the forming shoulder 122 of the previously described equipment. Such form and the method of making are described in detail in U.S. Publication No. 2007/0012328.

Referring now to FIGS. 4, 4A and 4B, the apparatus for use in the formation and filling of a pouched product 10 will be described. The apparatus 110 includes an elongated outer tubular member 150, the elongated outer tubular member having a first end 152, a second end 154 and an outer surface 156. Apparatus 110 also includes an elongated inner tubular member 160, the elongated inner tubular member 160 coaxially aligned within the elongated outer tubular member 150 so as to form an annular delivery chamber 170 and having a first end 162 and a second end 164. The first end 162 of elongated inner tubular member 160 has an inlet for receiving the product to be pouched. Second end 164 is provided with a plurality of circumferentially spaced exit orifices 158 in fluid communication with annular delivery chamber 170 and directed radially inwardly. Second end 164 has an exit for placing the product within the pouch 10 being formed.

Although it has been shown and described that the second end 164 of elongated inner tubular member 160 is provided with a plurality of circumferentially spaced exit orifices 158 in fluid communication with annular delivery chamber 170 and directed radially inwardly, it is also contemplated that in embodiments not according to the invention the second end 154 of elongated outer tubular member 150 could be provided with plurality of circumferentially spaced exit orifices in fluid communication with annular delivery chamber 170 and directed radially outwardly.

In one form, an inlet hub 172 affixed to the first end of the elongated outer tubular member 150 and the first end of the elongated inner tubular member 160 is provided, the inlet hub 172 having an axially aligned inlet 174 in communication with the first end 162 of the elongated inner tubular member 160 and a tangential inlet 176 in fluid communication with the annular delivery chamber 170. As may be appreciated from reference to FIG. 3 the outer surface of the elongated outer tubular member 150 provides a surface for forming the pouched product 10 thereabout. Inlet hub 172 may also be provided with purge air vent 178 for air management needs of the machine. In order to seal annular delivery chamber 170 a first closure ring 180 and a second closure ring 182 may be employed.

When tobacco is the product to be pouched, the inclusion of a variety of other components, including flavorants, is often desired. It is known to mix such components with the tobacco prior to forming the pouched product. However, due to the nature of many of the flavorants, it would be advantageous to add the flavorants separately to avoid issues with regard to the flowability of the tobacco.

As indicated, the apparatus for use in the formation and filling of a pouched product 110, disclosed herein, addresses these issues. In operation, a liquid comprising one or more flavorants and aromas may be fed to annular delivery chamber 170 and metered through the plurality of circumferentially spaced exit orifices 158, thereby providing at least a partial coating of the one or more flavorants on an inner surface of the web 22.

Suitable flavorants and aromas include, but are not limited to, any natural or synthetic flavor or aroma, such as tobacco, smoke, menthol, mint (such as peppermint and spearmint), chocolate, licorice, citrus and other fruit flavors, gamma octalactone, vanillin, ethyl vanillin, breath freshener flavors, spice flavors such as cinnamon, methyl salicylate, linalool, bergamot oil, geranium oil, lemon oil, and ginger oil. Other suitable flavors and aromas may include flavor compounds selected from the group consisting of an acid, an alcohol, an ester, an aldehyde, a ketone, a pyrazine, combinations or blends thereof and the like. Suitable flavor compounds may be selected, for example, from the group consisting of phenylacetic acid, solanone, megastigmatrienone, 2-heptanone, benzylalcohol, cis-3-hexenyl acetate, valeric acid, valeric aldehyde, ester, terpene, sesquiterpene, nootkatone, maltol, damascenone, pyrazine, lactone, anethole, iso-valeric acid, combinations thereof and the like.

Exemplary additional natural and artificial flavorants include, but are not limited to, peppermint, spearmint, wintergreen, menthol, cinnamon, chocolate, vanillin, licorice, clove, anise, sandalwood, geranium, rose oil, vanilla, lemon oil, cassia, fennel, ginger, ethylacetate, isoamylacetate, propylisobutyrate, isobutylbutyrate, ethylbutyrate, ethylvalerate, benzylformate, limonene, cymene, pinene, linalool, geraniol, citronellol, citral, orange oil, coriander oil, borneol, fruit extract, and the like. Particularly preferred additional flavor and aroma agents are essential oils and/or essences of coffee, tea, cacao, and mint.

The liquid may optionally comprise both natural and artificial sweeteners. Preferred sweeteners include water soluble sweeteners such as monosaccharides, disaccharides and polysaccharides (for example, xylose, ribose, sucrose, maltose, fructose, glucose, maltose, and mannose). In addition, or in the alternative to sweeteners, the liquid may comprise souring agents such as acetic acid, adipic acid, citric acid, lactic acid, malic acid, succinic acid, tartaric acid, and mixtures thereof.

In one form, the liquid has a viscosity approximately equal to that of water.

In one form, the elongated inner tubular member 160 of apparatus 110 has an outer diameter of about 5 mm to about 7 mm and a wall thickness of about 1 mm. In such a form, the elongated outer tubular member 150 is provided with an inner diameter sufficient to form an annular space of about 0.1 to about 0.2 mm. In one form, the elongated outer tubular member 150 has an outer diameter of about 7 mm to about 9 mm and a wall thickness of about 1 mm.

In one form, in order to flow sufficient liquid flavorant, second end 164 of elongated inner tubular member 160 of apparatus 110 is provided with at least four exit orifices 158 equally spaced. In another form, second end 164 of elongated inner tubular member 160 of apparatus 110 is provided with at least six exit orifices 158 equally spaced. In yet another form, second end 164 of elongated inner tubular member 160 of apparatus 110 is provided with at least eight exit orifices 158 equally spaced. In still another form, second end 164 of elongated inner tubular member 160 of apparatus 110 is provided with four exit orifices 158 each having a diameter of about 0.2 mm.

Advantageously, the size of the exit orifices 158 is selected such that at a particular pump rate, the flavorant tends to form beads adjacent the orifices 158. For pump rates in the range 7 mg to 35 mg of flavorant per pouch cycle, an orifice diameter of 0.2 mm has been found to have such effect. Additionally, movement of the tobacco through the inner tubular member is believed to create a pressure differential that serves to atomize the beads of flavorant formed adjacent the exit orifices 158, whereupon a coating of the flavorant is uniformly applied to interior surfaces of the pouch web.

As may be appreciated, a wide variety of materials are useful in the fabrication of the apparatus for use in the formation and filling of a pouched product 110. In one form, elongated outer tubular member 150 and the elongated inner tubular member 160 are each formed of stainless steel. In another form, the stainless steel is 316 stainless steel. In another form, elongated outer tubular member 150 and the elongated inner tubular member 160 are substantially equal in length and are each about 23 cm to about 30 cm (about 9 inches to about 12 inches) long.

With regard to supplying tobacco to elongated inner tubular member 160 of apparatus 110, metered portions of tobacco 20 may be blown via air into elongated inner tubular member 160, after the upper and lower sealing elements 112, 114 have been closed upon the tubular formation 28. Optionally, the longitudinal seam 12 is made narrower than the width of the overlapping, longitudinal edge portions 24, 26 along the tubular formation 28. In so doing, web material remains in an unsealed condition along the seam 12, and as such is air permeable. The air permeable web portions along the longitudinal seam 12 allow air to pass through the permeable web and thus avoid blowback of tobacco during tobacco feeding operations into the elongated inner tubular member 160 of apparatus 110.

In effect, the overlapping material along the seams 12 and/or 16 is optionally greater than the width of the sealed regions establishing the seams 12 and/or 16 so that along those seams some material remains in an unsealed condition and is therefore air-permeable. Optionally, one or more of the seams 12, 14 and 16 include at least one air permeable portion.

The air permeable portions along the seams 12 and/or 16 and/or the transverse zones 79 themselves allow air to pass through the porous web and thus avoid blowback of tobacco during tobacco feeding operations into the feed tube 85.

While a system for manufacturing pouched tobacco products has been described above, other systems can be used such as KDF machinery available from Hauni Manufacturing, Hamburg, Germany, whereby instead of using a forming shoulder 122, as described above, a garniture can be used to fold a continuous strip of web material into a tubular form which is heat sealed and filled with tobacco to form individual tobacco pouched products 10. Yet another system that can be used is one available from MediSeal GmbH of Flurstrasse 65, 33758 Schloss-Holte, Germany. See also U.S. Patent No. 4,703,765 for details of other machinery that can be adapted to manufacture pouches as described herein.

In another form, provided is a method of forming a pouched flavored tobacco product. The method includes the steps of providing a web for use in forming the pouched flavored tobacco product; providing a liquid comprising one or more flavorants to an apparatus for use in the formation and filling of a pouched flavored tobacco product, the apparatus including (i) an elongated outer tubular member, the elongated outer tubular member having a first end, a second end and an outer surface; (ii) an elongated inner tubular member, the elongated inner tubular member coaxially aligned within the elongated outer tubular member so as to form an annular delivery chamber and having a first end and a second end, the first end for receiving the product to be pouched, the second end having a plurality of circumferentially spaced exit orifices in fluid communication with the annular delivery chamber and directed radially inwardly, the second end for placing the product within the pouch being formed; and (iii) an inlet hub affixed to the first end of the elongated outer tubular member and the first end of the elongated inner tubular member, the inlet hub having an axially aligned inlet in communication with the first end of the elongated inner tubular member and a tangential inlet in fluid communication with the annular delivery chamber; wherein the outer surface of the elongated outer tubular member provides a surface for forming the pouched flavored tobacco product thereabout and the liquid comprising one or more flavorants is fed to the annular delivery chamber and metered through the plurality of circumferentially spaced exit orifices thereby providing at least a partial coating of the one or more flavorants to an inner surface of the web; and enclosing a tobacco component with the web.

As may be appreciated, the ability to apply a coating of one or more flavorants to an inner surface of the web can serve to obviate the need for a flavor liner material as part of the pouched product.

Exemplary tobacco materials 20 can be made of cut or ground tobacco and can include additives and/or humectants. Examples of suitable types of tobacco materials that may be used include, but are not limited to, flue-cured tobacco, Burley tobacco, Maryland tobacco, Oriental tobacco, rare tobacco, specialty tobacco, reconstituted tobacco, blends thereof and the like. Preferably, the tobacco material 20 is pasteurized. In the alternative, the tobacco material 20 may be fermented.

The tobacco material 20 may be provided in any suitable form, including shreds and/or particles of tobacco lamina, processed tobacco materials, such as volume expanded or puffed tobacco, or ground tobacco, processed tobacco stems, such as cut-rolled or cut-puffed stems, reconstituted tobacco materials, blends thereof, and the like. Genetically modified tobacco may also be used.

Additionally, the tobacco material can also include a supplemental amount of vegetable or plant fibers or particles such as particles or shreds of lettuce, cotton, flax, beet fiber, cellulosic fibers, blends thereof and the like.

Humectants can also be added to the tobacco material 20 to help maintain the moisture levels in the pouched tobacco product. Examples of humectants that can be used with the tobacco material include glycerol and propylene glycol. It is noted that the humectants can also be provided for a preservative effect, as the water activity of the product can be decreased with inclusion of a humectant, thus reducing opportunity for growth of micro-organisms. Additionally, humectants can be used to provide a higher moisture feel to a drier tobacco component.

As shown in FIG. 2, the pouched tobacco product 10 may optionally comprise lined pouched material comprising a web 22 and an optional liner 18. Preferably, the web 22 is constructed from cellulose fiber such as tea bag-type material. Alternative web materials may also be desired for use with the optional liners 18. Alternative web materials preferably have a neutral or pleasant taste or aroma. Preferably, the web material is selected to have desired properties of stain resistance, water permeability and/or porosity, and/or water insolubility. To promote heat-sealability the web may include fibers or coating of polypropylene or other heat-sealable material.

Additionally, the materials used for the web materials can be provided with predetermined levels for basis weight and/or wet strength in order to reduce occurrence of breakage of the web during manufacturing operations, storage and use. For example, webs can be provided with a basis weight of about 5 g/m² to about 25 g/m², such as 5-10 g/m², 10-15 g/m², 15-20 g/m², or 20-25 g/m² (grams/square meter) depending upon the final usage requirements, and/or a wet tensile cross-direction (CD) strength of about 15 N/m to about 75 N/m, such as 15-30 N/m, 30-45 N/m, 45-60 N/m, or 60-75 N/m (Newtons/meter), depending upon the final usage requirements, which can be sufficient for maintaining the webs therein. One exemplary web is a tea bag material with a basis weight of about 16.5 g/m² with a wet tensile CD strength of 68 N/m.

In one form, a water permeable, water-insoluble, porous, stain-resistant polymer membrane can be used as the web in order to allow flavor to permeate through the web 22.

It is also noted that the thickness of the web 22 can be varied to achieve desired levels of solubility through the web 22. Similarly, the thickness of the optional liner 18 can be varied to achieve desired levels of solubility through the optional liner 18.

Referring again to FIG.s 2 and 5, an optional liner 18 may be provided in a pouched tobacco product 10 in between the tobacco material 20 and the web 22. As used herein the terms "liner" and "liner material" include one or more material sheets, layers or coatings, which can be used to reduce the transfer of moisture from the tobacco component 20 to the web material 22, and/or reduce staining of the web material 22.

In one form, the optional liner 18 is incorporated as a separate sheet, layer or coating on the inside of the web 22 facing the tobacco material 20. As such, the optional liner 18 can be a thin film sheet, layer or coating of only a few microns in thickness or can be a thicker sheet, layer or coating up to about 1 centimeter in thickness.

Preferably, the optional liner 18 is dissolved upon placement of the pouched tobacco product 10 into the mouth although in some forms the optional liner 18 only partially dissolves. Preferably, the pouched tobacco product 10 provides an immediate and continued oral sensorial enjoyment of tobacco by a consumer of the pouched tobacco product 20.

Preferably, the optional liner 18 is not soluble in tobacco additives of the tobacco material 20 so that the additives may be added to the tobacco material without causing the optional liner 18 to be dissolved. By such arrangement the effectiveness of the optional liner 18 against staining of the web is maintained.

The optional liner 18 can also be made semi water-soluble in order to provide a slower rate of dissolution of the optional liner 18 when placed in a mouth, if desired. For example, the optional liner 18 itself can be used to be the carrier of a flavorant or flavor enhancer, wherein the optional liner 18 can provide rapid flavor release *(i.e.,* high water solubility) or a time sustained flavor release (*i.e*., low water solubility compared to the rapid flavor release liner). The optional liner 18 can also optionally include additional flavor ingredients. Thus, by using an optional liner 18 with predetermined level water solubility, a pouched tobacco product can be provided with rapid or time sustained flavor release and minimum staining of the web.

While the optional liner 18 can be used in an unflavored state, additional flavorant can be incorporated in the optional liner 18, as mentioned above. When a flavorant is incorporated into the optional liner 18, the optional liner 18 can be chosen to provide rapid flavor release (*i.e.,* immediate or a few seconds) or provide a long lasting, time-release flavor (*i.e*., prolonged up to several minutes and having the property of retarded or gradual dissolution in water to produce a sustained effect), as mentioned above or both.

In order to provide a rapid flavor release, a highly water-soluble optional liner can be used. By employing a highly water-soluble material in a pouched tobacco product 10, saliva can rapidly dissolve the optional liner 18 and rapidly release the flavor therein, thus providing flavor and a mouth feel at lower moisture levels similar to higher moisture content pouched tobacco products. Additionally, other materials can be used to retard the rapid dissolution of the optional liner 18. For example, additives, such as corn zein, can be added to a glucan liner to adjust (*i.e*., reduce) the water solubility of the glucan and thus retard or slow the dissolution speed of the glucan in water.

While any water-soluble material, such as cellulosic materials, gums, polymers, starches, proteins, and combinations thereof can be used, preferably the optional liner 18 is made of glucans because of their high water solubility, rapid dissolution, and pleasing mouth feel. Examples of suitable glucans include, without limitation, pullulan and elsinan.

Examples of cellulosic materials include, without limitation, carboxymethyl cellulose, methyl cellulose, ethyl cellulose, hydroxymethyl cellulose, hydroxyethyl cellulose, hydroxypropyl cellulose, hydroxypropyLmethyl cellulose, hydroxymethylpropyl cellulose, and combinations thereof.

Examples of water-soluble gums include, without limitation, gum arabic, xanthan gum, tragacanth, acacia, carageenan, guar gum, locust bean gum, pectin, alginates, and combinations thereof.

Examples of other polymers include, without limitation, polyvinyl alcohol, polyacrylic acid, polyvinyl pyrrolidone, poly(meth)acrylate, poly(meth)copolymers, dextrin, dextran, chitin, chitosin, polydextrose, fructose, and combinations thereof.

Examples of starches include, without limitation, tapioca, rice, corn, potato, wheat, and combinations thereof.

Examples of proteins include gelatin, zein, gluten, soy protein, soy protein isolate, whey protein, whey protein isolate, casein, levin, collagen, and combinations thereof.

If a longer flavor release by the optional liner 18 is desired, an optional liner other than the rapidly dissolving optional liners discussed above may be selected. Or in the alternative, a thicker layer of optional liner 18 can be used to extend the length of time for full dissolution of the optional liner and the associated release of flavorants. Or, as another alternative, longer organic chain materials or other agents can be added to the rapidly dissolving optional liners discussed above to lower solubility. Thus, the water solubility of the optional liner 18 can be increased or decreased and can provide control over the moisture content in the tobacco material 20 in the pouched tobacco product 10 by reducing the amount of moisture loss or evaporation from the tobacco material 20 in comparison to a pouched tobacco product without an optional liner.

Alternatively, a multilayered optional liner can be provided between a tobacco material 20 and a web 22. By providing a multilayered optional liner, the functionality of the optional liner can be enhanced compared to that of a single layer optional liner. For example, more than one level of water solubility can be used within the various layers of the multilayered optional liner if desired. The multilayered optional liner can include two, three, four, or more layers depending upon the properties desired from the optional liner.

For example, an optional liner 18 can be provided as two layers, i.e., an outer optional liner and an inner optional liner, between a tobacco material 20 and a web 22. The outer optional liner (adjacent the web 22) can be provided with an immediate initial taste perception *(i.e.,* a high water solubility level), while the inner optional liner (adjacent the tobacco material 20) can be formulated to be moisture resistant (*i.e.*, have a lower water solubility level than the outer optional liner).

The outer optional liner can include highly water-soluble optional liners such that saliva can dissolve the outer optional liner similar to the exemplary single optional liners 18 as mentioned above. As such, examples of the outer optional liner include polysaccharides, such as pectin.

The inner optional liner, on the other hand, can include moisture resistant material that can be both permeable to water and/or air, as well as water-insoluble so that moisture resistance can be maintained even during use. Examples of materials that can be used for the inner optional liner include any porous, water-insoluble webs, sheets or optional liners that can be made of perforated layers or loosely bound fibers or non-woven sheets of waxes, polymers, shellac, corn zein, cellulosic materials, and/or combinations thereof.

Exemplary waxes include carnauba wax, candelilla wax, rice-bran wax, and/or waxes of paraffin and/or polyethylene, wherein wax coatings can provide excellent moisture optional liners.

Exemplary polymers include polyvinyl acetate (PVA), and/or polysaccharides, such as caramelized sugar, which have water-insoluble, or time-release or slowly water soluble properties *(i.e.,* having the property of retarded or gradual dissolution in water to produce a sustained effect).

By using a combination of optional liners, the moisture content of the tobacco material itself can be controlled by the inner optional liner resisting release of the moisture from the tobacco material 20, while flavor can be released from the outer optional liner. Additionally, the inner optional liner can also be dissolvable and flavored, such that a two-stage flavor release can be provided, wherein the outer optional liner can release flavor as a first stage before the inner optional liner dissolves, which in turn releases a second stage of flavor, thus a two-or-more-stage flavor release can be attained if desired.

The optional liner can be disposed along the web by any suitable technique. For example, a strip of optional liner material can be fed along with a strip of web material and the strips can optionally be engaged with each other by pressing the strips together, use of adhesive or tackiness of the optional liner material. Alternatively the optional liner material can be coated on the web. In the case of multiple coatings, each coating, which may be the same or different optional liner, of a multilayered optional liner is preferably dried before application of subsequent coatings. For example, multiple coatings (for example, 5 coatings) may be applied by gravure printing (see further description, below) to provide a total coating weight effective to achieve non-staining and/or flavor delivery goals such as 10 mg to 200 mg, 20 mg to 100 mg, for example, 45 mg/pouched tobacco product. Each coating layer is preferably dried before application of a subsequent coating layer. In order to add flexibility and maintain and protect moisture levels in the pouched tobacco product, one or more humectants, such as, for example, propylene glycol, can be incorporated into the coated web optional liner material.

Preferably, drying of a coated optional liner is performed by gentle drying, for example, air drying at a low temperature (for example, slightly above ambient, preferably up to about 65°C (about 150°F), more preferably 40°C-65°C (100°F-150°F)) and at a lower speed and longer resident time than would be used with higher temperature drying (for example, 150°C-175°C (300°F-350°F)).

In another form, the moisture resistance *(i.e.,* the water solubility) of the optional liner 18 can be adjusted as a function of the moisture content of the tobacco material 20 in order to provide a desired moisture level in the pouched tobacco product 10. For example, the optional liner 18 can include humectants to allow a tobacco material in a pouched tobacco product to maintain a predetermined moisture content of the tobacco between about 5% to about 65%.

In another form, the water activity of the component(s) of the tobacco material 20 can be matched, wherein the water activity represents the ratio of the water vapor pressure of the component to the water vapor pressure of pure water under the same conditions and it is expressed as a fraction. Thus, by matching the water activities of the web material 22, the flavor compounds, and the tobacco material 20, the moisture transfer between the web material 22, flavor compounds, and the tobacco material 20 can be limited. Therefore, by matching or adjusting the water activities, the optional liner 18 can be used to provide flavor release alone, wherein staining of a web can be reduced without requiring further measure.

Exemplary optional liners 18 include food grade materials, such as polysaccharides including pullulan, protein films, or synthetic polymers, including those listed above. It is noted, however, that any optional liner that is biocompatible and reduces staining of the web can be used. Films that can be used for the optional liner include films manufactured by MonoSol, LLC of Portage, Indiana as set forth in International Publication Numbers WO 2004/009445 and WO 2004/052335.

In order to facilitate coating of the optional liner on the web, the optional liner may be in the form of a slurry. Alternatively or additionally, optional liner material (for example, slurry of material used to form a optional liner) may be applied to the web during manufacture of the web. Encapsulated flavorants may be incorporated into the optional liner to prolong flavor release from the optional liner.

In one form, the optional liner 18 is coated onto the web 22 prior to assembly of the pouched tobacco product 10 by a suitable coating process, such as, for example, kiss coating, slot coating, spraying or gravure printing. Coating of the optional liner 18 on the web material 22 allows for enhanced control and maintenance of the desired level of translucency of the web. Alternatively, the color of the pouched tobacco product may be controlled by inclusion of appropriate color additives into the optional liner 18 such as whiteners or the like. Thus, through appropriate selection of additives for the optional liner 18, the opaqueness, whiteness, and/or color of the pouched tobacco product may be controlled.

Kiss coating involves applying a coating to a surface using rotating rollers. Fluid flow in a nip between adjacent rollers and the relative speeds of the rollers control the coating thickness. In reverse-roll coating, an applicator roller preferably rotates against a ribbon of web 22 and a slurry of optional liner material is preferably established at the nip between the two rollers.

Slot coating can be used with slurries having a wide range of viscosities. In slot coating, slurry of optional liner material is directed through a slot die to provide a single layer application to a ribbon of the web 22 moving relative to the die. Slurry of optional liner material is fed into the die by a metering device such as, for example, a positive displacement pump. Coating thickness is dependent on speed of the web and flow rate of the slurry.

Gravure printing gives thin, accurate coatings and is capable of high speed application. In gravure printing, a roller with an engraved pattern rotates in a reservoir containing slurry of optional liner material. Slurry of optional liner material is collected in the engraved pattern and excess surface slurry of optional liner material is removed from the roller by a doctor blade. Slurry of optional liner material is transferred from the roller onto the ribbon of web 22.

The optional liner 18 may comprise optional components including, but not limited to, fragrances, coloring agents, filling agents, thickening agents, plasticizers, surfactants, stabilizing agents, antioxidants, preservatives, brighteners and the like.

The optional liner 18 may also include pigments (for example, coloring agents).

Filling agents may be incorporated in the optional liner 18. Exemplary filling agents include, but are not limited to, cellulose, titanium oxide, magnesium silicate (for example, talc), aluminum silicate, magnesium carbonate, calcium carbonate (for example, limestone), calcium phosphate, calcium sulfate, zinc oxide, aluminum oxide, and mixtures thereof. Other carbonate and phosphate salts can be added.

Starches and/or cellulose ethers can also be incorporated in the optional liner 18, wherein the starches and/or cellulose ethers can act as thickening agents or binding agents. Additionally, polymers, such as polyvinyl pyrrolidone and polyvinyl alcohol, and gums, such as xanthan gum, gum Arabic and acacia gum, can be used as thickening agents. Generally, the stiffness of an optional liner 18 can be increased and the dissolution rate (*i.e.*, dissolution upon exposure to moisture) can be decreased by increasing the average molecular weight of polymers that form the optional liner 18. Thus, by adding thickening agents the modulus (*i.e*., stiffness) of the optional liner 18 can be increased, while the propensity toward curling or bending of an optional liner 18 during or after drying (for example, during storage) can be decreased.

Plasticizing agents can also be used to control the stiffness of the optional liner 18, as well as the viscosity of the polymer melt from which an optional liner 18 is formed. Exemplary plasticizing agents include monoacetin; diacetin; triacetin; glycols, such as polyethylene glycol and propylene glycol; polyhydric alcohols, such as glycerin and sorbitol; mineral oils; vegetable oils; and glycerol and glycerol esters, such as glycerol triacetate.

Surfactants can also be incorporated in the optional liner 18. Suitable surfactants include, but are not limited to, mono and diglycerides of fatty acids, lactylates, pluronic acid, polyoxyethylene sorbitol esters, latanol, and sodium lauryl sulfate.

Stabilizing agents can also be incorporated in the optional liner 18. Exemplary stabilizing agents are gums, such as guar gum, xanthan gum, locust bean gum, and carrageenan.

Exemplary optional liners 18 can also optionally comprise antioxidants and/or preservatives. Exemplary antioxidants include, but are not limited to, ascorbic acid, vitamin E and sodium pyrosulfate. Exemplary preservatives include, but are not limited to, acetic acid, benzoic acid, citric acid, lactic acid, malic acid, sorbic acid and tartaric acid.

The optional liners 18 can be translucent or substantially opaque.

Sealing may be accomplished by any suitable sealing method, such as, for example, adhesive or by mutual sealing. Mutual sealing may be thermal or sonic. Preferably, sealing is accomplished by thermal sealing, as indicated above. In particular, the thermal sealing may be accomplished using an arcuate iron (heater), such as a heated disc. An arcuate iron would engage one side of the web, which preferably contains polypropylene, for example, in the form of polypropylene fibers or a polypropylene film, and press the first side of the web against the second side of the web, and against a second, opposed iron or non-heated surface.

While the present inventions have been described in connection with a number of exemplary forms, and implementations, the present inventions are not so limited, but rather cover various modifications, and equivalent arrangements, which fall within the purview of the present claims.

## Claims

1. An apparatus (110) for use in the formation and filling of a pouched flavored product (10), the apparatus comprising:
(a) an elongated outer tubular member (150), said elongated outer tubular member having a first end (152), a second end (154) and an outer surface (156);
(b) an elongated inner tubular member (160), said elongated inner tubular member coaxially aligned within said elongated outer tubular member (150) so as to form an annular delivery chamber (170) having a first end and a second end, the elongated inner tubular member (160) having a first end (162) and a second end (164), said first end (162 )of the elongated inner tubular member (160) for receiving the product to be pouched, said second end (164) of the elongated inner tubular member (160) having a plurality of circumferentially spaced exit orifices (158) In fluid communication with said annular delivery chamber (170) and directed radially inwardly, said second end (164) of the elongated inner tubular member (160) for placing the product within the pouch being formed; and
(c) an inlet hub (172) adjacent said first end (152) of said elongated outer tubular member (150) and said first end (162) of said elongated inner tubular member (160), said Inlet hub having a first inlet (174) In communication with said first end (162) of said elongated inner tubular member (160) and a second inlet (176) in fluid communication with said annular delivery chamber (170);
wherein said outer surface (156) of said elongated outer tubular member (150) provides a surface for forming the pouched product thereabout, wherein said first end of the annular delivery chamber (170) is sealed by a first closure ring (180) and said second end of the annular delivery chamber is sealed by a second closure ring (182).

2. Apparatus according to claim 1, wherein said first inlet (174) is axially aligned with said elongated inner tubular member (160) and said second inlet (176) is tangential.

3. A system (100) for making a pouched flavored product, the system comprising:
(a) an arrangement operative to supply a web material (22) for forming a pouch;
(b) an apparatus (110) according to any one of claims 1 to 2 for use in the formation and filling of the pouched flavored product;
(c) a forming arrangement for receiving the web from said supply of web material and folding the web about said apparatus to form the pouch having longitudinal edge portions; and
(d) a sealing arrangement operative for sealing the longitudinal edge portions (24, 26) of the web to form a seam (12) as the web is drawn along said apparatus.

4. A system according to claim 3, wherein a liquid comprising one or more flavorants may be fed to said annular delivery chamber (170) and metered through said plurality of circumferentially spaced exit orifices (158) thereby providing at least a partial coating of the one or more flavorants to an inner surface of the pouch.

5. A system according to claim 4, further comprising a syringe and parastolic pump for feeding the liquid to said annular delivery chamber (170).

6. A system according to claim 3. further comprising a drive arrangement (128) for advancing the web through said apparatus.

7. A system according to claim 6, further comprising an upper pair of opposing heat-sealing elements (112) and a lower pair of heat-sealing elements (114) to cooperate with a knife (126) to repetitively seal and sever pouched flavored product.

8. A system according to claim 7, wherein discrete charges of tobacco may be fed through said elongated inner tubular member (160) of said apparatus in timing with the operation of said heat-sealing elements (112, 114).

9. A system according to claim 8, wherein said heat-sealing elements (112, 114) and knife (126) follow a motion cycle wherein said heat-sealing elements (112, 114) close together and tobacco is fed into said elongated inner tubular member (160) of said apparatus.

10. A system according to claim 9, wherein metered portions of tobacco (20) may be blown via air Into said elongated inner tubular member (160) of said apparatus after the upper heat-sealing elements (112) are closed.

11. A method of forming a pouched flavored product (10), comprising:
(a) providing a web (22) for use in forming the pouched flavored product;
(b) providing a liquid comprising one or more flavorants to an apparatus for use In the formation and filling of a pouched flavored product, the apparatus including (i) an elongated outer tubular member, the elongated outer tubular member (150) having a first end (152), a second end (154) and an outer surface (156); (ii) an elongated inner tubular member (160), the elongated inner tubular member (160) coaxially aligned within the elongated outer tubular member (150) so as to form an annular delivery chamber (170) said elongated inner tubular member (160) having a first end (162) and a second end (164), the first end (162) for receiving the product to be pouched, the second end (164) having a plurality of circumferentially spaced exit orifices (158) in fluid communication with the annular delivery chamber (170) and directed radially inwardly, the second end (164) of elongated inner tubular member (160) for placing the product within the pouch being formed; and (iii) an inlet hub (172) adjacent the first end (152) of the elongated outer tubular member (150) and the first end (162) of the elongated inner tubular member (160) the inlet hub having a first inlet (174) in communication with the first end (162) of the elongated Inner tubular member (160) and a second inlet (176) in fluid communication with the annular delivery chamber (170); wherein the outer surface (156) of the elongated outer tubular member (150) provides a surface for forming the pouched flavored product thereabout and the liquid comprising one or more flavorants is fed to the annular delivery chamber (170) and metered through the plurality of circumferentially spaced exit orifices (158) thereby providing at least a partial coating of the one or more flavorants to an Inner surface of the pouch; and
(c) enclosing a product component with the web.

12. A method according to claim 11, further comprising the step of sealing overlapping portions of the web.

13. A method according to claim 12, wherein longitudinal overlapping portions (24,26) of the web are sealed.

14. A method according to claim 13, wherein transverse overlapping portions of the web are sealed.

15. A method according to claim 14, further comprising the step of severing the pouched flavored product from the web.

16. A method according to claim 11, wherein the first inlet (174) is axially aligned with the inner elongated tubular member (160) and the second inlet (176) is tangential.

## Patentansprüche

1. Vorrichtung (110) zur Verwendung beim Bilden und Füllen eines aromatisierten Beutelproduktes (10), wobei die Vorrichtung umfasst:
(a) ein längliches äußeres rohrförmiges Element (150), wobei das längliche äußere rohrförmige Element ein erstes Ende (152), ein zweites Ende (154) und eine Außenfläche (156) aufweist;
(b) ein längliches inneres rohrförmiges Element (160), wobei das längliche innere rohrförmige Element innerhalb des länglichen äußeren rohrförmigen Elements (150) koaxial ausgerichtet ist, um eine ringförmige Abgabekammer (170) zu bilden, die ein erstes Ende und ein zweites Ende aufweist, wobei das längliche innere rohrförmige Element (160) ein erstes Ende (162) und ein zweites Ende (164) aufweist und das erste Ende (162) des länglichen inneren rohrförmigen Elements (160) zum Aufnehmen des in einen Beutel zu füllenden Produktes ist und das zweite Ende (164) des länglichen inneren rohrförmigen Elements (160) mehrere in Umfangsrichtung beabstandete Auslassöffnungen (158) in Fluidverbindung mit der ringförmigen Abgabekammer (170) und radial nach innen gerichtet aufweist, wobei das zweite Ende (164) des länglichen inneren rohrförmigen Elements (160) zum Platzieren des Produktes innerhalb des gebildeten Beutels ist; und
(c) eine Einlassmuffe (172), die an das erste Ende (152) des länglichen äußeren rohrförmigen Elements (150) und das erste Ende (162) des länglichen inneren rohrförmigen Elements (160) angrenzt, wobei die Einlassmuffe einen ersten Einlass (174) in Verbindung mit dem ersten Ende (162) des länglichen inneren rohrförmigen Elements (160) und einen zweiten Einlass (176) in Fluidverbindung mit der ringförmigen Abgabekammer (170) aufweist;
wobei die Außenfläche (156) des länglichen äußeren rohrförmigen Elements (150) eine Fläche für das Bilden des Beutelproduktes um diese herum bereitstellt, wobei das erste Ende der ringförmigen Abgabekammer (170) durch einen ersten Dichtring (180) abgedichtet ist und das zweite Ende der ringförmigen Abgabekammer durch einen zweiten Dichtring abgedichtet ist (182).

2. Vorrichtung nach Anspruch 1, wobei der erste Einlass (174) mit dem länglichen inneren rohrförmigen Element (160) axial ausgerichtet ist und der zweite Einlass (176) tangential ist.

3. System (100) zum Herstellen eines aromatisierten Beutelproduktes, wobei das System umfasst:
(a) eine Anordnung, die betriebsfähig ist, ein Bahnmaterial (22) zuzuführen, um einen Beutel zu bilden;
(b) eine Vorrichtung (110) nach irgendeinem der Ansprüche 1 bis 2 zur Verwendung beim Bilden und Füllen des aromatisierten Beutelproduktes;
(c) eine Formanordnung, wobei die Formanordnung die Bahn von der Zuführung des Bahnmaterials aufnimmt und die Bahn um die Vorrichtung faltet, um den Beutel zu bilden, der Längskantenabschnitte aufweist; und
(d) eine Versiegelungsanordnung, die betriebsfähig ist, die Längskantenabschnitte (24, 26) der Bahn zu versiegeln, um eine Naht (12) zu bilden, während die Bahn entlang der Vorrichtung gezogen wird.

4. System nach Anspruch 3, wobei eine Flüssigkeit, die einen oder mehrere Geschmacksstoffe umfasst, in die ringförmige Abgabekammer (170) zugeführt und durch die mehreren in Umfangsrichtung beabstandeten Auslassöffnungen (158) dosiert werden kann, wodurch mindestens eine partielle Beschichtung aus dem einen oder den mehreren Geschmacksstoffen auf einer Innenfläche des Beutels vorgesehen wird.

5. System nach Anspruch 4, weiter umfassend eine Spritze und eine peristaltische Pumpe zum Zuführen der Flüssigkeit in die ringförmige Abgabekammer (170).

6. System nach Anspruch 3, weiter umfassend eine Antriebsanordnung (128) zum Voranbewegen der Bahn durch die Vorrichtung.

7. System nach Anspruch 6, weiter umfassend ein oberes Paar von einander gegenüberliegenden Heißversiegelungselementen (112) und ein unteres Paar von Heißversiegelungselementen (114) zum Zusammenwirken mit einem Messer (126), um wiederholt aromatisierte Beutelprodukte zu versiegeln und zu trennen.

8. System nach Anspruch 7, wobei getrennte Füllmengen von Tabak durch das längliche innere rohrförmige Element (160) der Vorrichtung in zeitlicher Abstimmung mit dem Betrieb der Heißversiegelungselemente (112, 114) zugeführt werden können.

9. System nach Anspruch 8, wobei die Heißversiegelungselemente (112, 114) und das Messer (126) einem Arbeitsgang folgen, bei dem die Heißversiegelungselemente (112, 114) sich schließen und Tabak in das längliche innere rohrförmige Element (160) der Vorrichtung zugeführt wird.

10. System nach Anspruch 9, wobei dosierte Tabakportionen (20) mittels Luft in das längliche innere rohrförmige Element (160) der Vorrichtung geblasen werden können, nachdem die oberen Heißversiegelungselemente (112) geschlossen wurden.

11. Verfahren zum Bilden eines aromatisierten Beutelproduktes (10), umfassend:
(a) Bereitstellen einer Bahn (22) zur Verwendung beim Bilden des aromatisierten Beutelproduktes;
(b) Bereitstellen einer Flüssigkeit, die einen oder mehrere Geschmacksstoffe umfasst, an eine Vorrichtung zur Verwendung beim Bilden und Füllen eines aromatisierten Beutelproduktes, wobei die Vorrichtung (i) ein längliches äußeres rohrförmiges Element beinhaltet und das längliche äußere rohrförmige Element (150) ein erstes Ende (152), ein zweites Ende (154) und eine Außenfläche (156) aufweist; (ii) ein längliches inneres rohrförmiges Element (160), wobei das längliche innere rohrförmige Element (160) innerhalb des länglichen äußeren rohrförmigen Elements (150) koaxial ausgerichtet ist, um eine ringförmige Abgabekammer (170) zu bilden, wobei das längliche innere rohrförmige Element (160) ein erstes Ende (162) und ein zweites Ende (164) aufweist und das erste Ende (162) zum Aufnehmen des in einen Beutel zu füllenden Produktes ist und das zweite Ende (164) mehrere in Umfangsrichtung beabstandete Auslassöffnungen (158) in Fluidverbindung mit der ringförmigen Abgabekammer (170) und radial nach innen gerichtet aufweist, wobei das zweite Ende (164) des länglichen inneren rohrförmigen Elements (160) zum Platzieren des Produktes innerhalb des gebildeten Beutels ist; und (iii) eine Einlassmuffe (172), die an das erste Ende (152) des länglichen äußeren rohrförmigen Elements (150) und das erste Ende (162) des länglichen inneren rohrförmigen Elements (160) angrenzt, wobei die Einlassmuffe einen ersten Einlass (174) in Verbindung mit dem ersten Ende (162) des länglichen inneren rohrförmigen Elements (160) und einen zweiten Einlass (176) in Fluidverbindung mit der ringförmigen Abgabekammer (170) aufweist; wobei die Außenfläche (156) des länglichen äußeren rohrförmigen Elements (150) eine Fläche bereitstellt, um das aromatisierte Beutelprodukt um diese herum zu bilden, und wobei die Flüssigkeit, die einen oder mehrere Geschmacksstoffe umfasst, in die ringförmige Abgabekammer (170) zugeführt und durch die mehreren in Umfangsrichtung beabstandeten Auslassöffnungen (158) dosiert wird, wodurch mindestens eine partielle Beschichtung aus dem einen oder den mehreren Geschmacksstoffen auf einer Innenfläche des Beutels vorgesehen wird; und
(c) Umschließen einer Produktkomponente mit der Bahn.

12. Verfahren nach Anspruch 11, weiter umfassend den Schritt des Versiegelns von überlappenden Abschnitten der Bahn.

13. Verfahren nach Anspruch 12, wobei längs laufende überlappende Abschnitte (24, 26) der Bahn versiegelt werden.

14. Verfahren nach Anspruch 13, wobei quer gerichtete überlappende Abschnitte der Bahn versiegelt werden.

15. Verfahren nach Anspruch 14, weiter umfassend den Schritt des Trennens des aromatisierten Beutelproduktes von der Bahn.

16. Verfahren nach Anspruch 11, wobei der erste Einlass (174) mit dem inneren länglichen rohrförmigen Element (160) axial ausgerichtet ist und der zweite Einlass (176) tangential ist.

## Revendications

1. Appareil (110) à utiliser pour la formation et le remplissage d'un produit aromatisé en sachet (10), l'appareil comprenant:
(a) un élément tubulaire extérieur allongé (150), ledit élément tubulaire extérieur allongé ayant une première extrémité (152), une seconde extrémité (154) et une surface extérieure (156);
(b) un élément tubulaire intérieur allongé (160), ledit élément tubulaire intérieur allongé aligné coaxialement à l'intérieur dudit élément tubulaire extérieur allongé (150) de manière à former une chambre de distribution annulaire (170) ayant une première extrémité et une seconde extrémité, l'élément tubulaire intérieur allongé (160) ayant une première extrémité (162) et une seconde extrémité (164), ladite première extrémité (162) de l'élément tubulaire intérieur allongé (160) pour la réception du produit à mettre en sachet, ladite seconde extrémité (164) de l'élément tubulaire intérieur allongé (160) ayant une pluralité d'orifices de sortie espacés de manière circonférentielle (158) en communication fluidique avec ladite chambre de distribution annulaire (170) et orientés radialement vers l'intérieur, ladite seconde extrémité (164) de l'élément tubulaire intérieur allongé (160) pour le placement du produit à l'intérieur du sachet étant formé; et
(c) un moyeu d'entrée (172) adjacent à ladite première extrémité (152) dudit élément tubulaire extérieur allongé (150) et ladite première extrémité (162) dudit élément tubulaire intérieur allongé (160), ledit moyeu d'entrée ayant une première entrée (174) en communication avec ladite première extrémité (162) dudit élément tubulaire intérieur allongé (160) et une seconde entrée (176) en communication fluidique avec ladite chambre de distribution annulaire (170);
dans lequel ladite surface extérieure (156) dudit élément tubulaire extérieur allongé (150) fournit une surface pour la formation du produit en sachet autour d'elle, où ladite première extrémité de la chambre de distribution annulaire (170) est scellée par un premier anneau de fermeture (180) et ladite seconde extrémité de la chambre de distribution annulaire est scellée par un second anneau de fermeture (182).

2. Appareil selon la revendication 1, dans lequel ladite première entrée (174) est alignée axialement avec ledit élément tubulaire intérieur allongé (160) et ladite seconde entrée (176) est tangentielle.

3. Système (100) pour la fabrication d'un produit aromatisé en sachet, le système comprenant:
(a) un dispositif opérationnel pour fournir un matériau en bande (22) pour la formation d'un sachet;
(b) un appareil (110) selon l'une quelconque des revendications 1 à 2 à utiliser pour la formation et le remplissage du produit aromatisé en sachet;
(c) un dispositif de formage pour la réception de la bande provenant dudit approvisionnement en matériau en bande et pour le pliage de la bande autour dudit appareil pour former le sachet qui présente des parties d'extrémité longitudinales; et
(d) un dispositif de scellage opérationnel pour sceller les parties d'extrémité longitudinales (24, 26) de la bande pour former un joint (12) tandis que la bande est tirée le long dudit appareil.

4. Système selon la revendication 3, dans lequel un liquide comprenant un ou plusieurs agents aromatisants peut être approvisionné à ladite chambre de distribution annulaire (170) et dosé via ladite pluralité d'orifices de sortie espacés de manière circonférentielle (158) fournissant ainsi au moins un enrobage partiel du ou des agents aromatisants à une surface intérieure du sachet.

5. Système selon la revendication 4, comprenant en outre une seringue et une pompe péristaltique pour introduire le liquide dans ladite chambre de distribution annulaire (170).

6. Système selon la revendication 3, comprenant en outre un dispositif d'entraînement (128) pour faire avancer la bande à travers ledit appareil.

7. Système selon la revendication 6, comprenant en outre une paire supérieure d'éléments de thermoscellage (112) opposés et une paire inférieure d'éléments de thermoscellage (114) pour coopérer avec un couteau (126) pour sceller et sectionner de manière répétitive un produit aromatisé en sachet.

8. Système selon la revendication 7, dans lequel des charges discrètes de tabac peuvent être introduites à travers ledit élément tubulaire intérieur allongé (160) dudit appareil en synchronisation avec le fonctionnement desdits éléments de thermoscellage (112, 114).

9. Système selon la revendication 8, dans lequel lesdits éléments de thermoscellage (112, 114) et le couteau (126) suivent un cycle de mouvement dans lequel lesdits éléments de thermoscellage (112, 114) se ferment ensemble et le tabac est introduit dans ledit élément tubulaire intérieur allongé (160) dudit appareil.

10. Système selon la revendication 9, dans lequel des portions dosées de tabac (20) peuvent être soufflées au moyen d'air dans ledit élément tubulaire intérieur allongé (160) dudit appareil après que les éléments supérieurs de thermoscellage (112) ont été fermés.

11. Procédé de formation d'un produit aromatisé en sachet (10), comprenant:
(a) la fourniture d'une bande (22) à utiliser pour la formation d'un produit aromatisé en sachet;
(b) la fourniture d'un liquide comprenant un ou plusieurs agents aromatisants à un appareil à utiliser pour la formation et le remplissage d'un produit aromatisé en sachet, l'appareil comprenant (i) un élément tubulaire extérieur allongé, l'élément tubulaire extérieur allongé (150) ayant une première extrémité (152), une seconde extrémité (154) et une surface extérieure (156); (ii) un élément tubulaire intérieur allongé (160), l'élément tubulaire intérieur allongé (160) aligné coaxialement dans l'élément tubulaire extérieur allongé (150) de manière à former une chambre de distribution annulaire (170) ledit élément tubulaire intérieur allongé (160) ayant une première extrémité (162) et une seconde extrémité (164), la première extrémité (162) pour la réception du produit à mettre en sachet, la seconde extrémité (164) ayant une pluralité d'orifices de sortie espacés de manière circonférentielle (158) en communication fluidique avec la chambre de distribution annulaire (170) et orientés radialement vers l'intérieur, la seconde extrémité (164) de l'élément tubulaire intérieur allongé (160) pour placer le produit à l'intérieur du sachet étant formé ; et (iii) un moyeu d'entrée (172) adjacent à la première extrémité (152) de l'élément tubulaire extérieur allongé (150) et à la première extrémité (162) de l'élément tubulaire intérieur allongé (160), le moyeu d'entrée ayant une première entrée (174) en communication avec la première extrémité (162) de l'élément tubulaire intérieur allongé (160) et une seconde entrée (176) en communication fluidique avec la chambre de distribution annulaire (170) ; où la surface extérieure (156) de l'élément tubulaire extérieur allongé (150) fournit une surface pour la formation du produit aromatisé en sachet autour d'elle et le liquide comprenant un ou plusieurs agents aromatisants est introduit dans la chambre de distribution annulaire (170) et dosé via la pluralité d'orifices de sortie espacés de manière circonférentielle (158) fournissant ainsi au moins un enrobage partiel du ou de plusieurs agents aromatisants à une surface intérieure du sachet; et
(c) l'enfermement d'un composant du produit avec la bande.

12. Procédé selon la revendication 11, comprenant en outre l'étape de scellage des parties de la bande qui se chevauchent.

13. Procédé selon la revendication 12, dans lequel les parties longitudinales de la bande qui se chevauchent (24, 26) sont scellées.

14. Procédé selon la revendication 13, dans lequel les parties transversales de la bande qui se chevauchent sont scellées.

15. Procédé selon la revendication 14, comprenant en outre l'étape de sectionnement du produit aromatisé en sachet de la bande.

16. Procédé selon la revendication 11, dans lequel la première entrée (174) est orientée axialement avec l'élément tubulaire intérieur allongé (160) et la seconde entrée (176) est orientée de manière tangentielle.
